# EUROPÄISCHE PATENTSCHRIFT

(11) **EP 0 445 107 B1**
(45) Veröffentlichungstag und Bekanntmachung des Hinweises auf die Patenterteilung: **21.06.1995**
(21) Anmeldenummer: 91890043.2
(22) Anmeldetag: 01.03.1991
(51) Int. Cl.: F16D 3/40, F16C 5/00, F16D 3/26

(54) **Kardangelenk**
Universal joint
Joint universel

(30) Priorität: 01.03.1990 AT 489/90
(43) Veröffentlichungstag der Anmeldung: 04.09.1991
(73) Patentinhaber: SVOBODA ENTWICKLUNGS KG, A-3100 St. Pölten (AT)
(72) Erfinder: Scheer, Johann, A-3380 Pöchlarn (AT)
(74) Vertreter: Itze, Peter, Dipl.-Ing.

(56) Entgegenhaltungen:
- DE-B- 2 947 395
- GB-A- 2 184 200
- US-A- 1 566 454
- US-A- 1 812 934

## Beschreibung

Die Erfindung betrifft ein Kardangelenk, bei welchem das Kreuz durch zwei Bolzen unterschiedlicher Dicke gebildet ist, wobei der dünnere Bolzen den dickeren Bolzen durch eine mittige Querbohrung durchsetzt, und wobei Distanzelemente zur Verhinderung der seitlichen Verschiebbarkeit der Gabeln der Gelenkstücke entlang der Bolzen eingesetzt sind.

Bei herkömmlichen Kardangelenken sind die Schwenkachsen der einzelnen Gelenkstücke über das sogenannte Kreuz miteinander verbunden, welches in der Regel ein geschmiedeter Teil ist, welcher dann mit seinen Zapfen durch Bohrungen in den Gelenkstücken hindurchgesetzt ist, und dort jede einzelne Drehachse mit dem zugehörigen Teil des Kardangelenkes vernietet ist. Derartige Gelenke sind in der Herstellung aufwendig, und sind insbesondere für solche Verwendungszwecke, bei welchen relativ geringe Kräfte zu übertragen sind, sehr kostenaufwendig.

Bei einer aus US-A-4,004,434 bekannten Ausbildung der eingangs genannten Art sind die Distanzelemente zu einem einzigen Block zusammengefaßt, welcher in die lichten Weiten der Gabeln eingesetzt ist. Dieser Block wird von beiden Bolzen durchsetzt, wobei der dünnere Bolzen dadurch am Herausfallen gehindert ist, daß er im Bereich der Durchsetzung durch Einschlagen des dickeren Bolzens eine Kröpfung erfährt. Dabei dient der Distanzblock als Widerlager. Diese Ausbildung hat den Nachteil, daß der Distanzblock, der mit seinen entsprechenden Außenflächen satt an den Innenflächen der beiden Gabeln anliegt, an diesen Flächen eine entsprechend hohe Reibung erwirkt, so daß das Kardangelenk, insbesondere bei stärkeren Abwinkelungen, einen erheblichen Drehwiderstand bereitet.

Der Erfindung liegt die Aufgabe zugrunde, ein Kardangelenk zu schaffen, welches hinsichtlich seines Aufbaues einfach und billig zu fertigen ist und welches eine größtmögliche Leichtgängigkeit ergibt.

Erfindungsgemäß wird diese Aufgabe dadurch gelöst, daß die Distanzelemente durch beidseits des einen Bolzens auf den anderen Bolzen aufgeschobene, zylindrische Außenflächen aufweisende Scheiben gebildet sind, deren Durchmesser der lichten Weite der Gabel des den parallel zu den Scheiben verlaufenden Bolzen aufnehmenden Gelenkstückes, und deren Dicke der halben Differenz zwischen lichter Weite der Gabel und dem Durchmesser des parallel zu den Scheiben verlaufenden Bolzens entspricht.

Damit wird erreicht, daß die Scheiben mit ihren zylindrischen Außenflächen an den entsprechenden Innenflächen der Gabel abrollen können, wodurch sich ein wesentlich geringerer Drehwiderstand ergibt, so daß das Kardangelenk wesentlich leichtgängiger wird. Dies wird zusätzlich auch noch dadurch erreicht, daß die Scheiben mit ihrer Innenseite an dem parallel verlaufenden Bolzen nur entlang einer Linienberührung abgestützt sind, so daß an der Innenseite aufgrund der geringen Berührungsfläche ebenfalls eine geringe Reibung erfolgt.

Vorteilhafterweise können die Scheiben parallel zum dickeren Bolzen beidseits desselben auf den dünneren Bolzen aufgeschoben sein, wodurch dünnere und leichtere Scheiben eingesetzt werden können.

In der Zeichnung ist ein Ausführungsbeispiel des Erfindungsgegenstandes dargestellt.

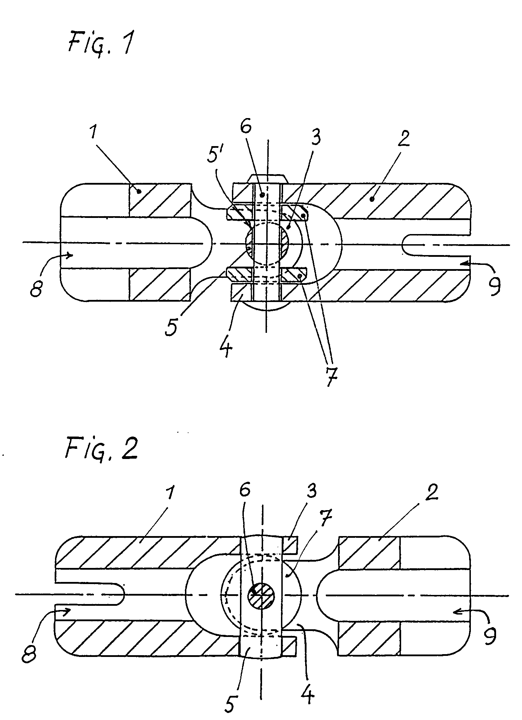

Fig. 1 zeigt einen Längsschnitt entlang der Längsmittelebene, welche durch den dünneren Bolzen gelegt ist.

Fig. 2 ist ein der Fig. 1 analoger Schnitt, jedoch entlang der Längsmittelachse, welche durch den dickeren Bolzen gelegt ist.

Mit 1 und 2 sind die beiden Gelenkstücke bezeichnet, deren Gabeln 3 und 4 ineinandergreifen. Das Kreuz des Kardangelenkes ist durch die beiden Bolzen 5 und 6 gebildet, wobei der Bolzen 5 größeren Durchmesser aufweist als der Bolzen 6. Der Bolzen 6 durchsetzt den Bolzen 5 durch die mittige Querbohrung 5'. Beidseits des dickeren Bolzens sind auf den dünneren Bolzen Distanzscheiben 7 aufgesetzt, deren Durchmesser der lichten Weite der Gabel 3 des Gelenkstückes 1 entspricht und deren Dicke der halben Differenz zwischen lichter Weite der Gabel 4 und Dicke des dickeren Bolzens 5 entspricht. Der dickere Bolzen ist dabei in die Bohrungen der Gabel 3 nur lose eingesetzt, wogegen der dünnere Bolzen in der Bohrung der Gabel 4 vernietet ist. Ein Querverschieben der Gabeln entlang der Bolzen wird durch die Distanzscheiben 7 verhindert, und zwar entlang des dickeren Bolzens durch die Umfangsfläche der Scheiben 7, welche sich an der inneren Seite der Gabel 3 abstützen, und ein Verschieben entlang des dünneren Bolzens 6 wird durch die Zwischenlage der Scheiben 7 dadurch verhindert, daß sich deren Seitenflanken einerseits an den Innenflanken der Gabelwandungen 4 bzw. an der Außenfläche des dickeren Bolzens 5 anlegen.

Durch diese Ausbildung ist es ermöglicht, daß durch bloße Vernietung des dünneren Bolzens 6 beide Bolzen in ihrer Lage in bezug auf die Gelenkstücke 1, 2 fixiert sind.

Mit 8 und 9 sind die jeweiligen Anschlußbohrungen an die weiterführenden Teile des Kardangelenkes bezeichnet.

## Patentansprüche

1. Kardangelenk, bei welchem das Kreuz durch zwei Bolzen (5, 6) unterschiedlicher Dicke gebildet ist, wobei der dünnere Bolzen (6) den dickeren Bolzen (5) durch eine mittige Querbohrung (5') durchsetzt, und wobei Distanzelemente (7) zur Verhinderung der seitlichen Verschiebbarkeit der Gabeln (3, 4) der Gelenkstücke entlang der Bolzen (5, 6) eingesetzt sind, dadurch gekennzeichnet, daß die Distanzelemente (7) durch beidseits des einen Bolzens (5) auf den anderen Bolzen (6) aufgeschobene, zylindrische Außenflächen aufweisende Scheiben gebildet sind, deren Durchmesser der lichten Weite der Gabel (3) des den parallel zu den Scheiben verlaufenden Bolzen (5) aufnehmenden Gelenkstükkes (1), und deren Dicke der halben Differenz zwischen lichter Weite der anderen Gabel (4) und dem Durchmesser des parallel zu den Scheiben verlaufenden Bolzens (5) entspricht.

2. Kardangelenk nach Anspruch 1, dadurch gekennzeichnet, daß die Scheiben (7) parallel zum dickeren Bolzen (5) beidseits derselben auf den dünneren Bolzen (6) aufgeschoben sind.

## Claims

1. Cardan joint wherein the cross is formed by two bolts (5, 6) of different thicknesses, the thinner bolt (6) passing through the thicker bolt (5) by means of a central transverse bore (5'), spacer elements (7) being provided to prevent lateral movement of the forks (3, 4) of the connecting members along the bolts (5, 6), characterised in that the spacer elements (7) are formed by discs having cylindrical outer surfaces which are pushed onto one bolt (6) on both sides of the other bolt (5), the diameter of said discs corresponding to the internal width of the fork (3) of the connecting member (1) which receives the bolt (5) extending parallel to the discs, and the thickness of said discs corresponding to half the difference between the internal width of the other fork (4) and the diameter of the bolt (5) extending parallel to the discs.

2. Cardan joint according to claim 1, characterised in that the discs (7) are pushed onto the thinner bolt (6) parallel to the thicker bolt (5) and on both sides thereof.

## Revendications

1. Joint de cardan, dans lequel le croisillon est formé par deux axes (5, 6) d'épaisseurs différentes, l'axe le plus fin (6) traversant l'axe le plus épais (5) par un perçage transversal (5') situé au milieu, et des éléments d'espacement (7) étant insérés pour empêcher les fourches (3, 4) des parties articulées d'être susceptibles de se décaler latéralement le long des axes (5, 6), caractérisé en ce que les éléments d'espacement (7) sont formés par des disques enfilés, de part et d'autre d'un axe (5), sur l'autre axe (6) et présentant des surfaces extérieures cylindriques, dont le diamètre correspond à la largeur intérieure de la fourche (3) de la partie articulée (1) comprenant l'axe (5) s'étendant parallèlement aux disques, et dont l'épaisseur correspond à la moitié de la différence entre la largeur intérieure de l'autre fourche (4) et le diamètre de l'axe (5) s'étendant parallèlement aux disques.

2. Joint de cardan selon la revendication 1, caractérisé en ce que les disques (7) sont enfilés sur l'axe (6) le plus fin, de façon parallèle à l'axe (5) le plus épais, de part et d'autre de celui-ci.
